# EUROPEAN PATENT SPECIFICATION

(11) **EP 4 557 468 B1**
(45) Date of publication and mention of the grant of the patent: **04.11.2026**
(21) Application number: 24212700.9
(22) Date of filing: 13.11.2024
(51) Int. Cl.: H01M 50/15, H01M 50/176, H01M 50/188, H01M 50/557, H01M 50/566, H01M 50/586, H01M 50/593

(54) **TOP COVER ASSEMBLY, ENERGY STORAGE DEVICE, AND ENERGY STORAGE SYSTEM**
ABDECKUNGSANORDNUNG, ENERGIESPEICHERVORRICHTUNG UND ENERGIESPEICHERSYSTEM
ENSEMBLE COUVERCLE SUPÉRIEUR, DISPOSITIF DE STOCKAGE D'ÉNERGIE ET SYSTÈME DE STOCKAGE D'ÉNERGIE

(30) Priority: 14.11.2023 CN 202311515865
(43) Date of publication of application: 21.05.2025
(73) Proprietor: Hithium Tech HK Limited, Hong Kong (HK)
(72) Inventor: XIAO, Hepan, Xiamen, 361100 (CN)
(74) Representative: DREISS Patentanwälte PartG mbB

(56) References cited:
- US-A1- 2022 021 069
- US-A1- 2023 019 175
- US-A1- 2023 080 232

## Description

### FIELD

The present disclosure relates to the field of energy storage technologies, and more particularly, to a top cover assembly, an energy storage device, and an energy storage system.

### BACKGROUND

When an internal temperature or an internal pressure of an energy storage device is too high, a chemical reaction occurs inside the energy storage device and generates a gas, which continuously increases the internal pressure of the energy storage device. Therefore, the energy storage device is likely to suffer damages, and even explodes in severe cases. US2023019175A1 discloses a power storage device, including: an electrode assembly including a positive-electrode plate and a negative-electrode plate stacked with a separator interposed between the positive-electrode plate and the negative-electrode plate, an exterior can accommodating the electrode assembly and an electrolyte solution. US2023080232A1 discloses a secondary battery, including: an electrode body, a case main body, and a cover. US2022021069A1 discloses a secondary battery, including: a case including an opening; an electrode assembly; and a cap assembly

### SUMMARY

Based on this, it is necessary to provide a top cover assembly, to solve a problem that a conventional energy storage device is likely to suffer damages, and even explodes in severe cases since an internal pressure of the conventional energy storage device is continuously increased when a chemical reaction occurs inside the conventional energy storage device and generates a gas.

In a first aspect, a top cover assembly for an energy storage device, as defined in claim 1, is provided.

In an embodiment, the connector further includes a weld portion. The extension portion is connected between the weld portion and the transition portion, and is arranged relative to a length direction of the lower insulation member by an angle.

In an embodiment, the upper insulation member includes a first upper insulation member and a second upper insulation member. The pole mounting hole includes a first pole mounting hole defined in the first upper insulation member and a second pole mounting hole defined in the second upper insulation member. At least part of the first pole mounting hole has a radial dimension greater than a radial dimension of the second pole mounting hole. The pole includes a positive pole and a negative pole. The positive pole includes a first body and a second body that are arranged coaxially. The negative pole includes a third body having a radial dimension greater than the radial dimension of the first body and smaller than the radial dimension of the second body. An outer circumferential surface of the second body abuts against a hole wall of the first pole mounting hole by inserting the positive pole into the first pole mounting hole. The first body is located at a side of the second body facing away from the first surface. An outer circumferential surface of the third body abuts against a hole wall of the second pole mounting hole by inserting the negative pole into the second pole mounting hole.

In an embodiment, the first upper insulation member includes a first step portion and a first limit portion connected to the first step portion. The second upper insulation member includes a second step portion and a second limit portion connected to the second step portion. Each of the first step portion and the second step portion abuts against a hole wall of the mounting hole and the first surface. Each of a bottom surface of the first step portion and a bottom surface of the second step portion abuts against the first face of the weld ring. Each of the first limit portion and the second limit portion extends facing away from the first surface. The second body has a bottom surface abutting against a top surface of the first step portion. The outer circumferential surface of the second body abuts against an inner circumferential surface of the first limit portion. The outer circumferential surface of the third body abuts against an inner circumferential surface of the second limit portion.

In an embodiment, each of the inner circumferential surface of the first limit portion and the inner circumferential surface of the second limit portion has a recess.

In an embodiment, a depth of the recess in a radial direction of the upper insulation member ranges from 0.02 mm to 0.2 mm; and/or a width of the recess in an axial direction of the upper insulation member ranges from 0.1 mm to 3 mm.

In a second aspect, an energy storage device is provided and includes the top cover assembly as described in the first aspect. The energy storage device is further defined in the embodiments of the present disclosure .

In a third aspect, an energy storage system is provided and includes the energy storage device as described in the second aspect. The energy storage device is configured to supply power to the energy storage system. The energy storage system is further defined in the embodiments of the present disclosure.

Compared with the related art, the present disclosure can provide the following advantageous effects. Since the fourth face of the connector protrudes away from the third face relative to the second face, the fourth face of the connector faces toward a side of a battery cell and the second face of the weld ring faces toward the side of the battery cell after the energy storage device is assembled with the top cover assembly. In a height direction of a battery, the fourth face is lower than the third face, which provides a height difference between the connector and the weld ring. Therefore, a space for exhausting a gas is provided between the weld ring and the battery cell inside the energy storage device. The gas that has been generated within a battery can be temporarily stored in the space, which can balance an internal gas pressure of the energy storage device to avoid an excessive pressure.

### BRIEF DESCRIPTION OF THE DRAWINGS

FIG. 1 is a perspective view of a top cover assembly according to an embodiment, viewed from a perspective.
FIG. 2 is a perspective view of a top cover assembly according to an embodiment, viewed from another perspective.
FIG. 3 is a top view of a top cover assembly according to an embodiment.
FIG. 4 is a partial cross-sectional view taken in line A-A in FIG. 3.
FIG. 5 is an enlarged view of part B in FIG. 4.
FIG. 6 is another partial cross-sectional view taken in line A-A in FIG. 3.
FIG. 7 is a perspective view of a partial structure of an upper insulation member according to an embodiment of the present disclosure.

Description of reference numerals of the accompanying drawings: 100 top cover assembly; 1 cover plate; 11 first surface; 12 second surface; 21 first upper insulation member; 211 first pole mounting hole; 212 first step portion; 213 first limit portion; 22 second upper insulation member; 221 second pole mounting hole; 222 second step portion; 223 second limit portion; 31 positive pole; 311 first body; 312 second body; 313 fourth body; 32 negative pole; 321 third body; 322 fifth body; 4 recess; 5 lower insulation member; 6 weld ring; 61 first face; 62 second face; 7 sealing member; 8 connector; 81 extension portion; 82 transition portion; 83 weld portion; 811 third face; 812 fourth face.

### DETAILED DESCRIPTION

In order to clarify the above-mentioned objects, features, and advantages of the present disclosure, specific embodiments of the present disclosure are described in detail below in conjunction with the accompanying drawings. In the following description, many specific details are provided to facilitate full understanding of the present disclosure. However, the present disclosure can be implemented in many different ways other than those described herein. Similar improvements can be made by those skilled in the art without contradicting the scope of the claims. Therefore, the present disclosure is not limited by specific embodiments disclosed below.

In the description of the present disclosure, it should be understood that, the orientation or the position indicated by terms such as "center," "longitudinal," "lateral," "length," "width," "thickness," "over," "below," "front," "rear," "left," "right," "vertical," "horizontal," "top," "bottom," "inner," "outer," "clockwise," "anti-clockwise," "axial," "radial," and "circumferential" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

The embodiments of the present disclosure provide an energy storage system. The energy storage system may include a large-scale power energy storage system and plays a role in adjusting a load curve, shaving peak and filling valley, improving a utilization efficiency of electricity distribution network equipment and lines, participating in power grid frequency modulation, and the like. A large-scale mobile energy storage system adopts an integrated container design, which can be conveniently used for power grid support and regional temporary power supply support. The energy storage system further includes a medium-scale power energy storage system such as a mobile charging device, i.e., an electrical device that needs to be charged temporarily, e.g., a building, a large conference, and a charging station (charging pile). Also, the energy storage system further includes a small-scale mobile energy storage system, which mainly refer to a small-scale energy storage system mounted in residential buildings or corporate campuses. Operation modes of the small-scale mobile energy storage system include an independent operation, a supporting operation with a renewable energy power generation device such as a small wind turbine and a rooftop photovoltaic device, a household heat storage device, and the like.

The energy storage system includes an energy storage device configured to supply power to the electricity-consumption device to meet operation requirements of the energy storage system. One or a plurality of energy storage devices may be provided. When the plurality of energy storage devices are provided, the plurality of energy storage devices may be connected in series, in parallel, or in series and in parallel, to achieve a relatively large capacity and relatively large power. The energy storage device may include, but is not limited to, a single battery, a battery module, a battery pack, a battery system, and the like. For example, the energy storage device may be a secondary battery such as a nickel metal hydride battery, a nickel cadmium battery, a lead acid (or lead storage) battery, a lithium ion battery, and a polymer lithium ion battery, or may be a lithium ion primary battery, a lithium sulfur battery, a sodium lithium ion battery or a sodium ion battery, or a magnesium ion battery. When the energy storage device is a single battery, the energy storage device may be a prismatic battery.

The energy storage device generally includes a battery cell, a housing for accommodating the battery cell, and a top cover assembly. The battery cell is provided with a positive tab and a negative tab at a top of the battery cell. The top cover assembly includes a positive pole and a negative pole. In a battery, a pole is a component that enables an inside of the battery to be in communication with an outside of the battery. The pole has one end abutting against a tab inside the housing and another end connected to other devices outside the energy storage device, in such a manner that a charging and discharging function of the energy storage device can be realized. The positive pole, which matches the positive tab having a higher potential, is usually implemented as an aluminum pole, while the negative pole, which matches the negative tab having a lower potential, is usually implemented as a copper-aluminum composite pole. A copper part of the copper-aluminum composite pole is connected to the negative tab. In a process of assembling the top cover assembly, the positive pole and the negative pole need to be assembled at correct parts of the cover plate, in such a manner that the positive pole is connected to the positive tab and the copper part of the negative pole is connected to the negative tab, which ensures a correct connection of a circuit, realizing current conduction. At present, the positive pole and the negative pole are similar in shape and the same in dimension, making it easy to assemble the positive pole and the negative pole in a reverse direction. After the copper part of the negative pole abuts against the positive tab, oxidation erosion of the energy storage device is caused due to a potential mismatch, which shortens a service life of the energy storage device.

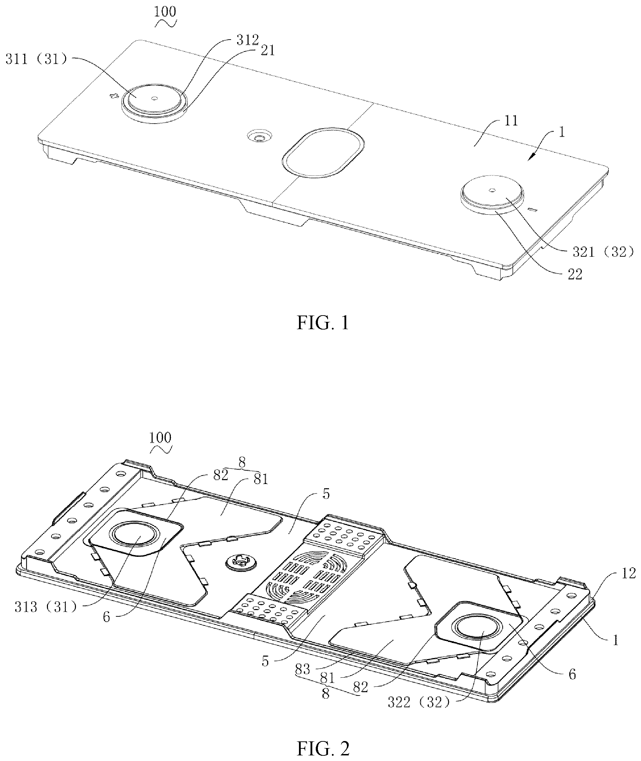

As illustrated in FIG. 1 and FIG. 2, the embodiments of the present disclosure provide a top cover assembly 100 based on the above problems. The top cover assembly 100 includes a cover plate 1, a pole, and an upper insulation member. In an exemplary embodiment of the present disclosure, the cover plate 1 has a plate-like structure as a whole. The cover plate 1 has a first surface 11 and a second surface 12 opposite to the first surface 11. The cover plate 1 has two mounting holes which penetrate the first surface 11 and the second surface 12. When the top cover assembly 100 is assembled to the energy storage device, the first surface 11 is a side surface of the cover plate 1 away from a battery cell of the energy storage device, and the second surface 12 is a side surface of the cover plate 1 close to the battery cell of the energy storage device.

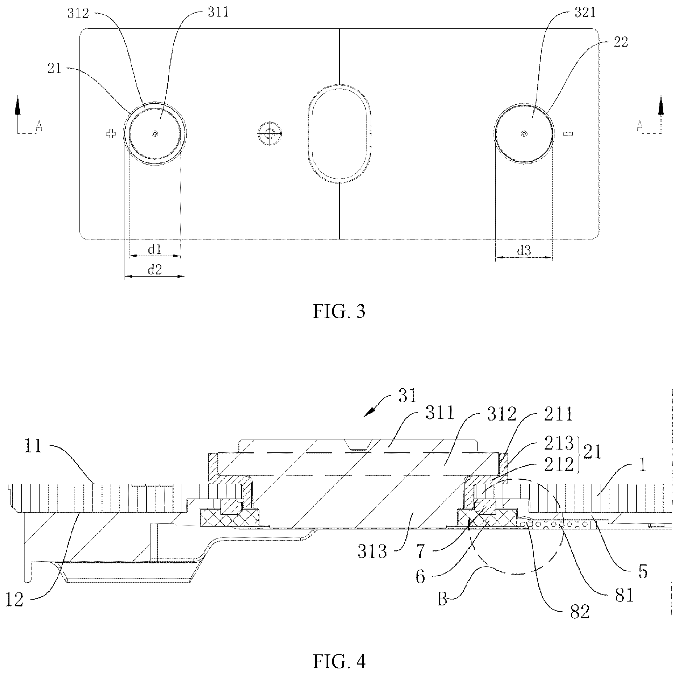

As illustrated in FIG. 1 and FIG. 2, a positive pole 31 and a negative pole 32 are spaced apart from each other in a length direction of the cover plate 1. As illustrated in FIG. 3, the positive pole 31 includes a first body 311 and a second body 312 that are arranged coaxially. The first body 311 is located at a side of the second body 312 away from the first surface 11. In other words, the first body 311 is located at a top surface of the second body 312 in a height direction of the second body 312. The second body 312 has a radial dimension greater than a radial dimension of the first body 311, in such a manner that the second body 312 protrudes outwardly in a radial direction relative to the first body 311. As illustrated in FIG. 3, the negative pole 32 includes a third body 321 having a radial dimension greater than the radial dimension of the first body 311 and smaller than the radial dimension of the second body 312. In the embodiments of the present disclosure, the first body 311, the second body 312, and the third body 321 are all cylinders. Both the positive pole 31 and the negative pole 32 are inserted into the cover plate 1 from top to bottom (i.e., from a side of the cover plate 1 away from the battery cell to a side of the cover plate 1 close to the battery cell). Since top surfaces of the first body 311 and the third body 321 are directly identified and compared during an assembly of the top cover assembly 100, a radial diameter d2 of the second body 312 is greater than a radial diameter d3 of the third body 321, and the radial diameter d3 of the third body 321 is greater than a radial diameter d1 of the first body 311, to facilitate an intuitive distinction between the positive pole and the negative pole. The top surfaces of the first body 311 and the third body 321 are in a same shape, both of which are complete circular top surfaces, with only differences in radial dimensions of the circular top surfaces. At least part of a first pole mounting hole 211 has a radial dimension greater than a radial dimension of a second pole mounting hole 221 to match the positive pole 31 and negative pole 32 having different diameters. The radial dimension of the first pole mounting hole 211 refers to a radial dimension of an inner circumferential surface of a first limit portion 213. The radial dimension of the second pole mounting hole 221 is a radial dimension of an inner circumferential surface of a second limit portion 223. The radial dimension of the inner circumferential surface of the first limit portion 213 is greater than the radial dimension of the inner circumferential surface of the second limit portion 223. In this way, the first limit portion 213 can only be assembled with the second body 312, so that the second body 312 corresponds only to the positive pole 31. Also, the second limit portion 223 can be used for an assembly of only the third body 321, so that the third body 321 corresponds only to the negative pole 32.

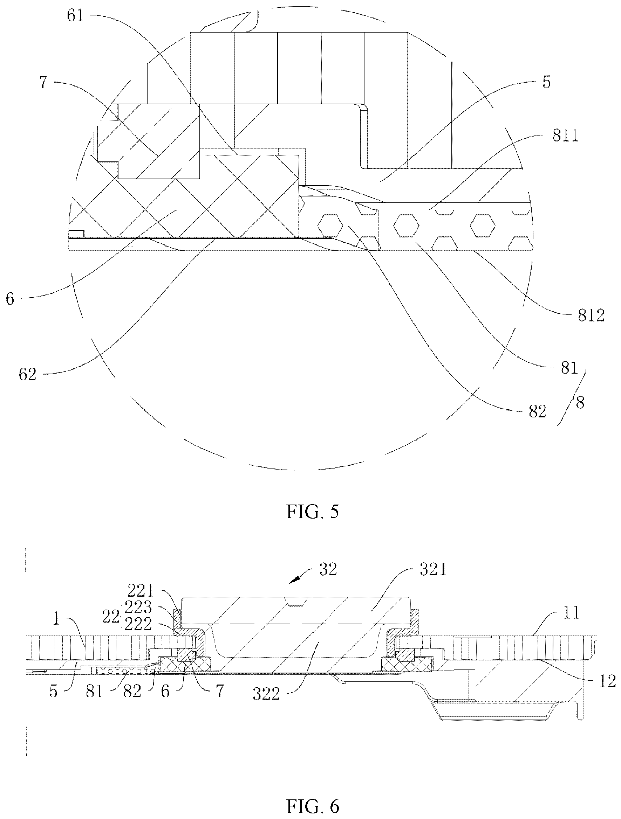

As illustrated in FIG. 4 and FIG. 6, the upper insulation member includes a first upper insulation member 21 and a second upper insulation member 22. The upper insulation member is configured to ensure insulation connections between the cover plate 1 and each of the positive pole 31 and the negative pole 32, to prevent creepage. The first upper insulation member 21 is inserted into one mounting hole. The second upper insulation member 22 is inserted into another mounting hole. Each of the first upper insulation member 21 and the second upper insulation member 22 abuts against both a hole wall of the mounting hole and the first surface 11 of the cover plate 1.

As illustrated in FIG. 4, the first upper insulation member 21 has the first pole mounting hole 211. An outer circumferential surface of the second body 312 abuts against a hole wall of the first pole mounting hole 211 by inserting the positive pole 31 into the first pole mounting hole 211. A bottom surface of the second body 312 and the first surface 11 of the cover plate 1 are indirectly connected by the first upper insulation member 21, which limits a position of the positive pole 31 to avoid a displacement of the positive pole 31 relative to the cover plate 1 in a height direction of the positive pole 31, preventing sinking of the positive pole 31. Therefore, a short circuit of the energy storage device due to the sinking of the positive pole 31 is avoided.

As illustrated in FIG. 6, the second upper insulation member 22 has the second pole mounting hole 221. An outer circumferential surface of the third body 321 abuts against a hole wall of the second pole mounting hole 221 by inserting the negative pole 32 into the second pole mounting hole 221. A bottom surface of the third body 321 and the first surface 11 of the cover plate 1 are indirectly connected by the second upper insulation member 22.

In the embodiments of the present disclosure, by adjusting the radial dimensions of the positive pole, the negative pole 32, the first pole mounting hole 211, and the second pole mounting hole 221, reverse assembly of the positive pole and the negative pole 32 can be avoided. In an exemplary embodiment of the present disclosure, by limiting a comparative relation between the radial dimension of the first pole mounting hole 211 and the radial dimension of the second pole mounting hole 221, the radial dimension of the first pole mounting hole 211 corresponds to the radial dimension of the second body 312 to complete assembly and abutment, and the radial dimension of the second pole mounting hole 221 corresponds to the radial dimension of the third body 321 to complete assembly and abutment. To better identify the positive pole 31 and the negative pole 32, the first body 311 having a smaller radial dimension is arranged at the top surface of the second body 312, in such a manner that the first body 311 can be used as an identification structure to identify the positive pole 31. Therefore, the second body 312 is guided by the first body 311 to be assembled to the first pole mounting hole 211 having a larger radial dimension. In other words, the first body 311 having a smaller radial dimension directly corresponds to the first pole mounting hole 211 having a larger radial dimension, while the third body 321 having a larger radial dimension directly corresponds to the second pole mounting hole 221 having a smaller radial dimension. When the positive pole 31 and the negative pole 32 are reverse assembled, neither the first body 311 nor the second body 312 of the positive pole 31 matches the second pole mounting hole 221, and the third body 321 of the negative pole 32 also fails to match the first pole mounting hole 211, due to a mismatch of radial dimensions. In this way, only the positive pole 31 can be inserted into the first pole mounting hole 211 and only the negative pole 32 can be inserted into the second pole mounting hole 221, which prevents the energy storage device from being used in reverse polarities, protecting the energy storage device.

As illustrated in FIG. 4, the positive pole 31 further includes a fourth body 313 coaxially connected to the second body 312. The fourth body 313 is disposed at a side of the second body 312 away from the first body 311. In other words, the second body 312 is located between the first body 311 and the fourth body 313. The first body 311 is located at the top surface of the second body 312. The fourth body 313 is located at the bottom surface of the second body 312. An outer circumferential surface of the fourth body 313 abuts against the hole wall of the first pole mounting hole 211. The fourth body 313 is indirectly connected to a hole wall of a mounting hole of the cover plate 1 by the first upper insulation member 21 to realize insulation between the fourth body 313 and the cover plate 1. The first body 311, the second body 312, and the fourth body 313 are all made of aluminum. The fourth body 313 is connected to the positive tab in the energy storage device.

As illustrated in FIG. 4, the fourth body 313 has a radial dimension smaller than the radial dimension of the second body 312, in such a manner that the second body 312 protrudes outwardly in the radial direction relative to the first body 311 and the fourth body 313. In this way, the positive pole 31 is in a spindle shape having a large middle part and two small ends, which facilitates an identification of the positive pole 31 and an insertion of the positive pole 31 into the first pole mounting hole 211 from top to bottom. It can be understood that both the outer circumferential surface of the second body 312 and the outer circumferential surface of the fourth body 313 abut against the hole wall of the first pole mounting hole 211. The first upper insulation member 21 is designed into a stepped shape to match a shape of the positive pole 31.

As illustrated in FIG. 6, in some embodiments, the negative pole 32 further includes a fifth body 322 coaxially abutting against the third body 321. The bottom surface of the third body 321 is connected to the first surface 11 of the cover plate 1 through the fifth body 322 and the second upper insulation member 22. In the negative pole 32 according to the embodiments of the present disclosure, the third body 321 is made of aluminum. The fifth body 322 is made of a copper-aluminum composite material. The third body 321 is in a shape of a cylinder. The fifth body 322 includes a copper part and an aluminum part that is in a trapezoidal shape. The copper part has an accommodation groove. The aluminum part can abut against an inside of the accommodation groove. The copper part extends, away from the aluminum part, along two opposite ends of the copper part in a width direction of the copper part to form a protrusion. A top surface of the protrusion is connected to a bottom surface of the aluminum part. An outer circumferential surface of the protrusion abuts against the hole wall of the second pole mounting hole 221, and is flush with the outer circumferential surface of the third body 321. A bottom surface of the protrusion of the third body 321 is connected to the first surface 11 of the cover plate 1 by the second upper insulation member 22.

As illustrated in FIG. 6, radial dimensions of the fifth body 322 gradually decreases in a height direction of the fifth body 322. In this way, the negative pole 32 presents a T-shape having a large upper end and a small lower end, which facilitates an insertion of the negative pole 32 into the first pole mounting hole 211 from top to bottom. Both the outer circumferential surface of the third body 321 and the outer circumferential surface of the fifth body 322 abut against the hole wall of the second pole mounting hole 221. The second upper insulation member 22 is also designed into a stepped shape to match a shape of the negative pole 32.

At present, a structure of the positive pole and a structure the negative pole are affected by a processing technology and limit performance of the energy storage device. Two ends of each of a conventional positive pole and a conventional negative pole have large diameters, while a middle part of each of the conventional positive pole and the conventional negative pole has a small diameter. That is, the two ends of the pole protrude outwardly relative to the middle part. A cross-section of the pole in an axial direction is in a " 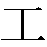 " shape. This kind of structure usually needs to be formed and machined through a combination of stamping and numerical control turning technology, which leads to complicated manufacturing processes and a difficulty in controlling a dimensional machining accuracy of the pole, resulting in errors during machining. In addition, a top end of each of the conventional positive pole and the conventional negative pole is provided with a step continuously extending around its own central axis, which also requires additional machining procedures and affects the machining accuracy. Further, the conventional positive pole and the conventional negative pole are of different shapes and different dimensions, which is likely to lead to different current densities (that is, a current intensity per unit area). In this way, an overcurrent protection capability of each of the conventional positive pole and the conventional negative pole fails, which affects a charging rate and a discharging rate, shortens the service life of the energy storage device, and decreases stability of the energy storage device. In the embodiments of the present disclosure, the positive pole 31 and the negative pole 32 have simple structures and can be molded directly through stamping, which reduces the machining procedures and improves the machining accuracy, allowing the radial dimension of the first body 311, the radial dimension of the second body 312, and the radial dimension of the third body 321 to be better controlled. Based on this, by adjusting relationships between the radial dimension of the first body 311, the radial dimension of the second body 312, and the radial dimension of the third body 321, overcurrent protection can be satisfied and the service life of the energy storage device can be extended.

In some embodiments, a difference between the radial dimension of the second body 312 and the radial dimension of the third body 321 is T1, and a difference between the radial dimension of the third body 321 and the radial dimension of the first body 311 is T2, where T2 ≥T1. In this way, common conductivity and common stability of the first body 311 and the second body 312 are similar to those of the third body 321, which balances a current intensity between the positive pole 31 and the negative pole 32 and improves an overcurrent protection capability of both the positive pole 31 and the negative pole 32.

As illustrated in FIG. 4, in some embodiments, the first upper insulation member 21 includes a first step portion 212 and a first limit portion 213 abutting against the first step portion 212. The first step portion 212 abuts against the hole wall of the mounting hole and the first surface 11. The first limit portion 213 extends facing away from the first surface 11. The outer circumferential surface of the second body 312 abuts against the inner circumferential surface of the first limit portion 213. The bottom surface of the second body 312 abuts against a top surface of the first step portion 212. It can be understood that the first step portion 212 includes a first part and a second part connected at a right angle. The outer circumferential surface of the fourth body 313 is indirectly connected to the hole wall of the mounting hole by the first part. The bottom surface of the second body 312 is connected to a top surface of the second part, and is indirectly connected to the first surface 11 of the cover plate 1 by the second part. The first step portion 212 and the first limit portion 213 that are connected at an angle can enlarge an insulation contact area between the positive pole 31 and the cover plate 1, enhancing prevention of the creepage.

As illustrated in FIG. 6, in some embodiments, the second upper insulation member 22 includes a second step portion 222 and a second limit portion 223 connected to the second step portion 222. The second step portion 222 abuts against the hole wall of the mounting hole and the first surface 11 of the cover plate 1. The second limit portion 223 extends facing away from the first surface 11. The outer circumferential surface of the third body 321 abuts against the inner circumferential surface of the second limit portion 223. In other words, the second step portion 222 includes a third part and a fourth part connected at a right angle. An outer circumferential surface of the copper part of the fifth body 322 abuts against an inner circumferential surface of the third part, and is indirectly connected to the hole wall of the mounting hole of the cover plate 1 by the third part. The bottom surface of the protrusion of the copper part abuts against a top surface of the fourth part, and is indirectly connected to the first surface 11 of the cover plate 1 by the fourth part. Each of the outer circumferential surface of the third body 321 and the outer circumferential surface of the protrusion abuts against the inner circumferential surface of the second limit portion 223. The second step portion 222 and the second limit portion 223 connected at an angle can enlarge an insulation contact area between the negative pole 32 and the cover plate 1, further enhancing the prevention of the creepage.

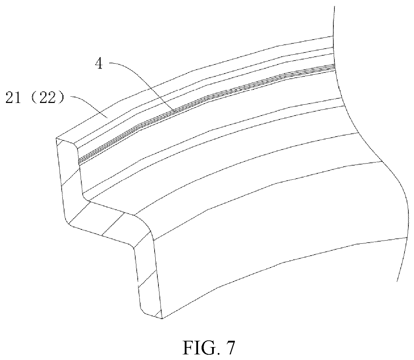

As illustrated in FIG. 7, in some embodiments, each of the inner circumferential surface of the first limit portion 213 and the inner circumferential surface of the second limit portion 223 has a recess 4. The recess 4 may extend continuously to surround the positive pole 31 or the negative pole 32, or a plurality of recesses 4 may be arranged at intervals to surround the positive pole 31 or the negative pole 32. The recess 4 can prevent the upper insulation member from sticking to a front mold during injection molding, which is beneficial to mold stripping.

In some embodiments, a depth of the recess 4 in a radial direction of the upper insulation member ranges from 0.02 mm to 0.2 mm. A width of the recess 4 in an axial direction of the upper insulation member ranges from 0.1 mm to 3 mm. Exemplarily, the depth may be any value within the above range, e.g., 0.02 mm, 0.04 mm, 0.06 mm, 0.08 mm, 0.1 mm, 0.1 mm, 0.12 mm, 0.14 mm, 0.16 mm, 0.18 mm, and 0.2 mm. The width may be any value within the above range, e.g., 0.1 mm, 0.5 mm, 1.0 mm, 1.5 mm, 2.0 mm, 2.5 mm, and 3.0 mm. When each of the depth and the width of the recess 4 is smaller than the above lower limit value, the upper insulation member still partially sticks to the front mold. When each of the depth and the width of the recess 4 is greater than the above upper limit value, the upper insulation member has an insufficient thickness, and thus insulation performance of the upper insulation member is reduced, which results in creepage between the pole and the cover plate 1.

As illustrated in FIG. 4 and FIG. 6, at present, during charging and discharging of the energy storage device, a temperature of the battery cell gradually increases, and an internal gas pressure of the battery also gradually increases. When a temperature inside the energy storage device or a pressure inside the energy storage device is too high, damages or an explosion is likely to occur. Based on this problem, the top cover assembly 100 of the embodiments of the present disclosure further includes a weld ring 6, a connector 8, and a lower insulation member 5. As illustrated in FIG. 5, the weld ring 6 has a first face 61 and a second face 62 opposite to the first face 61 in a thickness direction of the weld ring 6. The connector 8 is connected to at least part of an outer circumferential surface of the weld ring 6. The connector 8 has a third face 811 and a fourth face 812 opposite to the third face 811 in a thickness direction of the connector 8. The third face 811 faces towards a same side as the first face 61. The fourth face 812 is connected to the second face 62. The lower insulation member 5 is connected to the outer circumferential surface of the weld ring 6 and each of the first face 61 and the third face 811. As illustrated in FIG. 5, the fourth face 812 protrudes away from the third face 811 relative to the second face 62. In this way, when the top cover assembly 100 is assembled to the energy storage device, the fourth face 812 of the connector 8 is lower than the second face 62 of the weld ring 6 in a height direction of the energy storage device, in such a manner that a height difference exists between the connector 8 and the weld ring 6. Therefore, a pressure relief space is provided between the weld ring 6 and the battery cell to accommodate part of the gas, which can balance an internal gas pressure of the energy storage device to reduce damages to or an explosion of the energy storage device.

The lower insulation member 5 is connected to the second surface 12 of the cover plate 1. The weld ring 6 is arranged around the outer circumferential surface of the pole. The upper insulation member abuts against the first face 61 of the weld ring 6. The weld ring 6 enables the pole to withstand greater vibration, current and pressure. The weld ring 6 and the pole to which the weld ring 6 is directly connected are made of a same material, which can reduce a welding difficulty and a risk of a weld seam defect. In an exemplary embodiment of the present disclosure, the weld ring 6 at a side of the positive pole 31 is arranged around the outer circumferential surface of the fourth body 313. The fourth body 313 is made of aluminum. The weld ring 6 is also made of aluminum. The weld ring 6 at a side of the negative pole 32 is arranged around the outer circumferential surface of the copper part of the fifth body 322 and is made of copper. Generally, a bottom surface of the weld ring 6 is flush with a bottom surface of the pole to improve welding stability. When the fourth face 812 of the connector 8 is flush with a bottom surface of the lower insulation member 5 and the height difference exists between the weld ring 6 and the connector 8, a height of each of the weld ring 6 and the pole can be reduced to lower costs.

As illustrated in FIG. 2, the connector 8 includes an extension portion 81 and a transition portion 82. As illustrated in FIG. 4 and FIG. 6, the transition portion 82 has a side connected to the at least part of the outer circumferential surface of the weld ring 6 and the opposite side connected to the extension portion 81. In a direction from the weld ring 6 to the extension portion 81, the transition portion 82 gradually bends from the third face 811 towards the fourth face 812. The transition portion 82 that gradually bends can relieve a stress to improve welding stability.

As illustrated in FIG. 2, the connector 8 further includes a weld portion 83. The extension portion 81 is connected between the weld portion 83 and the transition portion 82, and is arranged relative to a length direction of the lower insulation member 5 by an angle. The extension portion 81 may be symmetrically connected at two sides of the weld ring 6 about a center of the weld ring 6 to form a wing-shaped structure. During the assembly of the top cover assembly 100, at a side where the second face 12 is located, the positive pole 31 is connected to a positive weld ring, and the negative pole 32 is connected to a negative weld ring. Then, the connector 8 is connected to the weld ring 6. The weld portion 83 is arranged relative to the extension portion 81 by an angle, in such a manner that an inclined assembly seam is defined between the extension portion 81 and the lower insulation member 5, which can provide guidance to reduce a deformation between the weld ring 6 and the pole and a deformation between the connector 8 and the weld ring 6. In this way, control over a depth of penetration can be facilitated to reduce an incidence of defective connections. It can be noted that the top cover assembly 100 may be assembled through a welding process such as ultrasonic welding, resistance welding, arc welding, laser welding, and friction welding, or through an assembly process such as stamping and riveting.

As illustrated in FIG. 4 and FIG. 6, the top cover assembly 100 further includes a sealing member 7. An accommodation cavity is defined at an outer circumferential surface of the upper insulation member, the first face 61 of the weld ring 6, a side surface of the lower insulation member 5, and the second surface 12 of the cover plate 1 together. The sealing member 7 is arranged in the accommodation cavity, and may be made of a flexible material or an elastic material to provide the sealing member 7 with a predetermined degree of elastic deformation capability. The sealing member 7 is tightly compressed between the weld ring 6 and the second surface 12 of the cover plate 1 to fill a gap between the pole and the cover plate 1, which prevents a leakage of an electrolyte inside the energy storage device. In another exemplary embodiment of the present disclosure, the upper insulation member and the lower insulation member 5 in the embodiments of the present disclosure may be made of plastic, rubber, or other materials that enable insulation.

Technical features in the above embodiments can be combined arbitrarily as long as they fall within the scope of the appended claims. For concise description, not all possible combinations of the technical features in the above embodiments are described. However, any combination of the technical features in the above embodiments, falling within the scope of the appended claims, should be considered as falling within the scope of the present disclosure, as long as no conflict occurs between combinations of the technical features.

While several embodiments of the present disclosure have been described above in a specific and detailed manner, the protection scope of the present disclosure cannot be construed as being limited to these embodiments. It should be noted that, those skilled in the art can make various variants and improvements without departing from the scope of the appended claims.

## Claims

1. A top cover assembly (100) for an energy storage device, comprising:
a weld ring (6) having a first face (61) and a second face (62) opposite to the first face (61) in a thickness direction of the weld ring (6);
a connector (8) connected to at least part of an outer circumferential surface of the weld ring (6), the connector (8) having a third face (811) facing towards the same side as the first face (61),
and a fourth face (812) opposite to the third face (811) in a thickness direction of the connector (8); the connector (8) comprising an extension portion (81) and a transition portion (82), the transition portion(82) having a side connected to said at least part of the outer circumferential surface of the weld ring (6) and the opposite side connected to the extension portion (81), wherein in a direction from the weld ring (6) to the extension portion (81), the fourth face (812) is connected to the second face (62) in a manner that extends the second face (62), then the transition portion (82) gradually bends such that in the extension portion (81), the fourth face (812) protrudes away from the third face (811) relative to the second face (62);
a lower insulation member (5) connected to the outer circumferential surface of the weld ring (6) and to each of the first face (61) and the third face (811);
a cover plate (1) having a first surface (11) and a second surface (12) opposite to the first surface (11), the cover plate (1) having a mounting hole penetrating the first surface (11) and the second surface (12), and the lower insulation member (5) being connected to the second surface (12);
an upper insulation member (21, 22) inserted into the mounting hole and having a pole mounting hole (211, 221), the upper insulation member (21, 22) abutting against the first surface (11) and the first face (61) of the weld ring (6); and
a pole (31, 32) inserted into the pole mounting hole (211, 221), the pole (31, 32) having an outer circumferential surface abutting against a hole wall of the pole mounting hole (211, 221) and an inner circumferential surface of the weld ring (6),
wherein the weld ring (6) is arranged around the outer circumferential surface of the pole (31, 32) through welding.

2. The top cover assembly (100) according to claim 1, wherein the extension portion (81) is symmetrically connected at two sides of the weld ring (6) about a center of the weld ring (6).

3. The top cover assembly (100) according to claim 1, wherein the connector (8) further comprises a weld portion (83), and the extension portion (81) is connected between the weld portion (83) and the transition portion (82), and is arranged relative to a length direction of the lower insulation member (5) by an angle.

4. The top cover assembly (100) according to claim 3, wherein the weld portion (83) is arranged relative to the extension portion (81) by an angle.

5. The top cover assembly (100) according to claim 1, wherein:
an outer circumferential surface of the upper insulation member (21, 22), the first face (61) of the weld ring (6), a side surface of the lower insulation member (5), and the second surface (12) of the cover plate (1) defines an accommodation cavity;
a sealing member (7) being disposed in the accommodation cavity; and
the sealing member (7) being made of a flexible material or an elastic material and tightly compressed between the weld ring (6) and the second surface (12) of the cover plate (1).

6. The top cover assembly (100) according to claim 1, wherein:
the upper insulation member (21, 22) comprises a first upper insulation member (21) and a second upper insulation member (22), and the pole mounting hole (211, 221) comprises a first pole mounting hole (211) defined in the first upper insulation member (21) and a second pole mounting hole (221) defined in the second upper insulation member (22), at least part of the first pole mounting hole (211) having a radial dimension greater than a radial dimension of the second pole mounting hole (221); and
the pole (31, 32) comprises a positive pole (31) and a negative pole (32), the positive pole (31) comprising a first body (311) and a second body (312) that are arranged coaxially, the negative pole (32) comprising a third body (321), the third body (321) having a radial dimension greater than the radial dimension of the first body (311) and smaller than the radial dimension of the second body (312), wherein an outer circumferential surface of the second body (312) abuts against a hole wall of the first pole mounting hole (211) by inserting the positive pole (31) into the first pole mounting hole (211), wherein the first body (311) is located at a side of the second body (312) facing away from the first surface (11), and wherein an outer circumferential surface of the third body (321) abuts against a hole wall of the second pole mounting hole (221) by inserting the negative pole (32) into the second pole mounting hole (221).

7. The top cover assembly (100) according to claim 6, wherein the upper insulation member (21, 22) is configured to ensure insulation connections between the cover plate (1) and each of the positive pole (31) and the negative pole (32).

8. The top cover assembly (100) according to claim 6, wherein the first upper insulation member (21) comprises a first step portion (212) and a first limit portion (213) connected to the first step portion (212), and the second upper insulation member (22) comprises a second step portion (222) and a second limit portion (223) connected to the second step portion (222), wherein:
each of the first step portion (212) and the second step portion (222) abuts against a hole wall of the mounting hole and the first surface (11);
each of a bottom surface of the first step portion (212) and a bottom surface of the second step portion (222) abuts against the first face (61) of the weld ring (6);
each of the first limit portion (213) and the second limit portion (223) extends facing away from the first surface (11);
the second body (312) has a bottom surface abutting against a top surface of the first step portion (212);
the outer circumferential surface of the second body (312) abuts against an inner circumferential surface of the first limit portion (213); and
the outer circumferential surface of the third body (321) abuts against an inner circumferential surface of the second limit portion (223).

9. The top cover assembly (100) according to claim 8, wherein each of the inner circumferential surface of the first limit portion (213) and the inner circumferential surface of the second limit portion (223) has a recess (4).

10. The top cover assembly (100) according to claim 9, wherein:
a depth of the recess (4) in a radial direction of the upper insulation member (21, 22) ranges from 0.02 mm to 0.2 mm; and/or
a width of the recess (4) in an axial direction of the upper insulation member (21, 22) ranges from 0.1 mm to 3 mm.

11. An energy storage device, comprising the top cover assembly (100) according to any one of claims 1 to 10.

12. An energy storage system, comprising the energy storage device according to claim 11, the energy storage device being configured to supply power to the energy storage system.

## Patentansprüche

1. Oberdeckelbaugruppe (100) für eine Energiespeichervorrichtung, umfassend:
einen Schweißring (6), der eine erste Fläche (61) und eine zweite Fläche (62) aufweist, die in einer Dickenrichtung des Schweißrings (6) der ersten Fläche (61) gegenüberliegt;
ein Verbindungselement (8), das mit zumindest einem Teil einer Außenumfangsfläche des Schweißrings (6) verbunden ist, wobei das Verbindungselement (8) eine dritte Fläche (811), die zur selben Seite wie die erste Fläche (61) gerichtet ist, und eine vierte Fläche (812), die in einer Dickenrichtung des Verbindungselements (8) der dritten Fläche (811) gegenüberliegt, aufweist, wobei das Verbindungselement (8) einen Verlängerungsabschnitt (81) und einen Übergangsabschnitt (82) umfasst, wobei der Übergangsabschnitt (82) eine Seite, die mit dem genannten zumindest einen Teil der Außenumfangsfläche des Schweißrings (6) verbunden ist, und eine gegenüberliegende Seite, die mit dem Verlängerungsabschnitt (81) verbunden ist, aufweist, wobei in einer Richtung von dem Schweißring (6) zu dem Verlängerungsabschnitt (81) die vierte Fläche (812) in einer die zweite Fläche (62) verlängernden Weise mit der zweiten Fläche (62) verbunden ist, wobei sich anschließend der Übergangsabschnitt (82) allmählich derart krümmt, dass in dem Verlängerungsabschnitt (81) die vierte Fläche (812) gegenüber der zweiten Fläche (62) in einer von der dritten Fläche (811) wegweisenden Richtung vorsteht;
ein unteres Isolierelement (5), das mit der Außenumfangsfläche des Schweißrings (6) sowie jeweils mit der ersten Fläche (61) und der dritten Fläche (811) verbunden ist;
eine Deckplatte (1), die eine erste Oberfläche (11) und eine der ersten Oberfläche (11) gegenüberliegende zweite Oberfläche (12) aufweist, wobei die Deckplatte (1) eine Montageöffnung aufweist, die die erste Oberfläche (11) und die zweite Oberfläche (12) durchdringt, und wobei das untere Isolierelement (5) mit der zweiten Oberfläche (12) verbunden ist;
ein oberes Isolierelement (21, 22), das in die Montageöffnung eingesetzt ist und eine Polmontageöffnung (211, 221) aufweist, wobei das obere Isolierelement (21, 22) an der ersten Oberfläche (11) und an der ersten Fläche (61) des Schweißrings (6) anliegt; und
einen Pol (31, 32), der in die Polmontageöffnung (211, 221) eingesetzt ist, wobei der Pol (31, 32) eine Außenumfangsfläche aufweist, die an einer Lochwand der Polmontageöffnung (211, 221) und an einer Innenumfangsfläche des Schweißrings (6) anliegt,
wobei der Schweißring (6) durch Schweißen um die Außenumfangsfläche des Pols (31, 32) herum angeordnet ist.

2. Oberdeckelbaugruppe (100) nach Anspruch 1, wobei der Verlängerungsabschnitt (81) in Bezug auf einen Mittelpunkt des Schweißrings (6) an zwei Seiten des Schweißrings (6) symmetrisch verbunden ist.

3. Oberdeckelbaugruppe (100) nach Anspruch 1, wobei das Verbindungselement (8) ferner einen Schweißabschnitt (83) umfasst und der Verlängerungsabschnitt (81) zwischen dem Schweißabschnitt (83) und dem Übergangsabschnitt (82) angeordnet und mit diesen verbunden ist und in einem Winkel zu einer Längsrichtung des unteren Isolierelements (5) angeordnet ist.

4. Oberdeckelbaugruppe (100) nach Anspruch 3, wobei der Schweißabschnitt (83) in einem Winkel zu dem Verlängerungsabschnitt (81) angeordnet ist.

5. Oberdeckelbaugruppe (100) nach Anspruch 1, wobei:
eine Außenumfangsfläche des oberen Isolierelements (21, 22), die erste Fläche (61) des Schweißrings (6), eine Seitenfläche des unteren Isolierelements (5) und die zweite Oberfläche (12) der Deckplatte (1) einen Aufnahmeraum definieren;
ein Dichtungselement (7) in dem Aufnahmeraum angeordnet ist; und
das Dichtungselement (7) aus einem flexiblen Material oder einem elastischen Material besteht und zwischen dem Schweißring (6) und der zweiten Oberfläche (12) der Deckplatte (1) fest zusammengedrückt ist.

6. Oberdeckelbaugruppe (100) nach Anspruch 1, wobei:
das obere Isolierelement (21, 22) ein erstes oberes Isolierelement (21) und ein zweites oberes Isolierelement (22) umfasst und die Polmontageöffnung (211, 221) eine erste Polmontageöffnung (211), die in dem ersten oberen Isolierelement (21) ausgebildet ist, und eine zweite Polmontageöffnung (221), die in dem zweiten oberen Isolierelement (22) ausgebildet ist, umfasst, wobei zumindest ein Teil der ersten Polmontageöffnung (211) eine radiale Abmessung aufweist, die größer als eine radiale Abmessung der zweiten Polmontageöffnung (221) ist; und
der Pol (31, 32) einen Pluspol (31) und einen Minuspol (32) umfasst, wobei der Pluspol (31) einen ersten Körper (311) und einen zweiten Körper (312) umfasst, die koaxial angeordnet sind, der Minuspol (32) einen dritten Körper (321) umfasst und der dritte Körper (321) eine radiale Abmessung aufweist, die größer als die radiale Abmessung des ersten Körpers (311) und kleiner als die radiale Abmessung des zweiten Körpers (312) ist, wobei durch Einsetzen des Pluspols (31) in die erste Polmontageöffnung (211) eine Außenumfangsfläche des zweiten Körpers (312) an einer Lochwand der ersten Polmontageöffnung (211) anliegt, wobei der erste Körper (311) auf einer von der ersten Oberfläche (11) abgewandten Seite des zweiten Körpers (312) angeordnet ist und wobei durch Einsetzen des Minuspols (32) in die zweite Polmontageöffnung (221) eine Außenumfangsfläche des dritten Körpers (321) an einer Lochwand der zweiten Polmontageöffnung (221) anliegt.

7. Oberdeckelbaugruppe (100) nach Anspruch 6, wobei das obere Isolierelement (21, 22) dazu eingerichtet ist, isolierende Verbindungen zwischen der Deckplatte (1) und dem Pluspol (31) sowie zwischen der Deckplatte (1) und dem Minuspol (32) sicherzustellen.

8. Oberdeckelbaugruppe (100) nach Anspruch 6, wobei das erste obere Isolierelement (21) einen ersten Stufenabschnitt (212) und einen mit dem ersten Stufenabschnitt (212) verbundenen ersten Begrenzungsabschnitt (213) umfasst und das zweite obere Isolierelement (22) einen zweiten Stufenabschnitt (222) und einen mit dem zweiten Stufenabschnitt (222) verbundenen zweiten Begrenzungsabschnitt (223) umfasst, wobei:
der erste Stufenabschnitt (212) und der zweite Stufenabschnitt (222) jeweils an einer Lochwand der Montageöffnung und an der ersten Oberfläche (11) anliegen;
eine Bodenfläche des ersten Stufenabschnitts (212) und eine Bodenfläche des zweiten Stufenabschnitts (222) jeweils an der ersten Fläche (61) des Schweißrings (6) anliegen;
sich der erste Begrenzungsabschnitt (213) und der zweite Begrenzungsabschnitt (223) jeweils in eine von der ersten Oberfläche (11) abgewandte Richtung erstrecken;
der zweite Körper (312) eine Bodenfläche aufweist, die an einer Oberseite des ersten Stufenabschnitts (212) anliegt;
die Außenumfangsfläche des zweiten Körpers (312) an einer Innenumfangsfläche des ersten Begrenzungsabschnitts (213) anliegt; und
die Außenumfangsfläche des dritten Körpers (321) an einer Innenumfangsfläche des zweiten Begrenzungsabschnitts (223) anliegt.

9. Oberdeckelbaugruppe (100) nach Anspruch 8, wobei die Innenumfangsfläche des ersten Begrenzungsabschnitts (213) und die Innenumfangsfläche des zweiten Begrenzungsabschnitts (223) jeweils eine Vertiefung (4) aufweisen.

10. Oberdeckelbaugruppe (100) nach Anspruch 9, wobei:
eine Tiefe der Vertiefung (4) in einer radialen Richtung des oberen Isolierelements (21, 22) im Bereich von 0,02 mm bis 0,2 mm liegt; und/oder
eine Breite der Vertiefung (4) in einer axialen Richtung des oberen Isolierelements (21, 22) im Bereich von 0,1 mm bis 3 mm liegt.

11. Energiespeichervorrichtung, umfassend die Oberdeckelbaugruppe (100) nach einem der Ansprüche 1 bis 10.

12. Energiespeichersystem, umfassend die Energiespeichervorrichtung nach Anspruch 11, wobei die Energiespeichervorrichtung dazu eingerichtet ist, das Energiespeichersystem mit Strom zu versorgen.

## Revendications

1. Un ensemble couvercle supérieur (100) pour un dispositif de stockage d'énergie, comprenant :
un anneau de soudage (6) ayant une première face (61) et une deuxième face (62) opposée à la première face (61) dans une direction de l'épaisseur de l'anneau de soudage (6) ;
un connecteur (8) connecté à au moins une partie d'une surface circonférentielle externe de l'anneau de soudage (6), le connecteur (8) ayant une troisième face (811) orientée vers le même côté que la première face (61), et une quatrième face (812) opposée à la troisième face (811) dans une direction de l'épaisseur du connecteur (8), le connecteur (8) comprenant une partie d'extension (81) et une partie de transition (82), la partie de transition (82) ayant un côté connecté à ladite au moins une partie de la surface circonférentielle externe de l'anneau de soudage (6) et le côté opposé connecté à la partie d'extension (81), dans lequel, dans une direction allant de l'anneau de soudage (6) à la partie d'extension (81), la quatrième face (812) est connectée à la deuxième face (62) de manière à prolonger la deuxième face (62), puis la partie de transition (82) se courbe progressivement de sorte que, dans la partie d'extension (81), la quatrième face (812) fait saillie à l'opposé de la troisième face (811) par rapport à la deuxième face (62) ;
un élément isolant inférieur (5) connecté à la surface circonférentielle externe de l'anneau de soudage (6) et à chacune de la première face (61) et de la troisième face (811) ;
une plaque de couverture (1) ayant une première surface (11) et une deuxième surface (12) opposée à la première surface (11), la plaque de couverture (1) ayant un trou de montage pénétrant la première surface (11) et la deuxième surface (12), et l'élément isolant inférieur (5) étant connecté à la deuxième surface (12) ;
un élément isolant supérieur (21, 22) inséré dans le trou de montage et ayant un trou de montage de pôle (211, 221), l'élément isolant supérieur (21, 22) venant en butée contre la première surface (11) et la première face (61) de l'anneau de soudage (6) ; et
un pôle (31, 32) inséré dans le trou de montage de pôle (211, 221), le pôle (31, 32) ayant une surface circonférentielle externe venant en butée contre une paroi de trou du trou de montage de pôle (211, 221) et une surface circonférentielle interne de l'anneau de soudage (6),
dans lequel l'anneau de soudage (6) est agencé autour de la surface circonférentielle externe du pôle (31, 32) par soudage.

2. L'ensemble couvercle supérieur (100) selon la revendication 1, dans lequel la partie d'extension (81) est connectée symétriquement au niveau de deux côtés de l'anneau de soudage (6) autour d'un centre de l'anneau de soudage (6).

3. L'ensemble couvercle supérieur (100) selon la revendication 1, dans lequel le connecteur (8) comprend en outre une partie de soudage (83), et la partie d'extension (81) est connectée entre la partie de soudage (83) et la partie de transition (82), et est agencée par rapport à une direction de longueur de l'élément isolant inférieur (5) selon un angle.

4. L'ensemble couvercle supérieur (100) selon la revendication 3, dans lequel la partie de soudage (83) est agencée par rapport à la partie d'extension (81) selon un angle.

5. L'ensemble couvercle supérieur (100) selon la revendication 1, dans lequel :
une surface circonférentielle externe de l'élément isolant supérieur (21, 22), la première face (61) de l'anneau de soudage (6), une surface latérale de l'élément isolant inférieur (5), et la deuxième surface (12) de la plaque de couverture (1) définissent une cavité de réception ;
un élément d'étanchéité (7) étant disposé dans la cavité de réception ; et
l'élément d'étanchéité (7) étant constitué d'un matériau flexible ou d'un matériau élastique et fermement comprimé entre l'anneau de soudage (6) et la deuxième surface (12) de la plaque de couverture (1).

6. L'ensemble couvercle supérieur (100) selon la revendication 1, dans lequel :
l'élément isolant supérieur (21, 22) comprend un premier élément isolant supérieur (21) et un deuxième élément isolant supérieur (22), et le trou de montage de pôle (211, 221) comprend un premier trou de montage de pôle (211) défini dans le premier élément isolant supérieur (21) et un deuxième trou de montage de pôle (221) défini dans le deuxième élément isolant supérieur (22), au moins une partie du premier trou de montage de pôle (211) ayant une dimension radiale supérieure à une dimension radiale du deuxième trou de montage de pôle (221) ; et
le pôle (31, 32) comprend un pôle positif (31) et un pôle négatif (32), le pôle positif (31) comprenant un premier corps (311) et un deuxième corps (312) qui sont agencés coaxialement, le pôle négatif (32) comprenant un troisième corps (321), le troisième corps (321) ayant une dimension radiale supérieure à la dimension radiale du premier corps (311) et inférieure à la dimension radiale du deuxième corps (312), dans lequel une surface circonférentielle externe du deuxième corps (312) vient en butée contre une paroi de trou du premier trou de montage de pôle (211) par l'insertion du pôle positif (31) dans le premier trou de montage de pôle (211), dans lequel le premier corps (311) est situé au niveau d'un côté du deuxième corps (312) orienté à l'opposé de la première surface (11), et dans lequel une surface circonférentielle externe du troisième corps (321) vient en butée contre une paroi de trou du deuxième trou de montage de pôle (221) par l'insertion du pôle négatif (32) dans le deuxième trou de montage de pôle (221).

7. L'ensemble couvercle supérieur (100) selon la revendication 6, dans lequel l'élément isolant supérieur (21, 22) est configuré pour assurer des connexions d'isolation entre la plaque de couverture (1) et chacun parmi le pôle positif (31) et le pôle négatif (32).

8. L'ensemble couvercle supérieur (100) selon la revendication 6, dans lequel le premier élément isolant supérieur (21) comprend une première partie étagée (212) et une première partie de limitation (213) connectée à la première partie étagée (212), et le deuxième élément isolant supérieur (22) comprend une deuxième partie étagée (222) et une deuxième partie de limitation (223) connectée à la deuxième partie étagée (222), dans lequel :
chacune de la première partie étagée (212) et de la deuxième partie étagée (222) vient en butée contre une paroi de trou du trou de montage et la première surface (11) ;
chacune d'une surface inférieure de la première partie étagée (212) et d'une surface inférieure de la deuxième partie étagée (222) vient en butée contre la première face (61) de l'anneau de soudage (6) ;
chacune de la première partie de limitation (213) et de la deuxième partie de limitation (223) s'étend en étant orientée à l'opposé de la première surface (11) ;
le deuxième corps (312) a une surface inférieure venant en butée contre une surface supérieure de la première partie étagée (212) ;
la surface circonférentielle externe du deuxième corps (312) vient en butée contre une surface circonférentielle interne de la première partie de limitation (213) ; et
la surface circonférentielle externe du troisième corps (321) vient en butée contre une surface circonférentielle interne de la deuxième partie de limitation (223).

9. L'ensemble couvercle supérieur (100) selon la revendication 8, dans lequel chacune de la surface circonférentielle interne de la première partie de limitation (213) et de la surface circonférentielle interne de la deuxième partie de limitation (223) a un évidement (4).

10. L'ensemble couvercle supérieur (100) selon la revendication 9, dans lequel :
une profondeur de l'évidement (4) dans une direction radiale de l'élément isolant supérieur (21, 22) est comprise entre 0,02 mm et 0,2 mm ; et/ou
une largeur de l'évidement (4) dans une direction axiale de l'élément isolant supérieur (21, 22) est comprise entre 0,1 mm et 3 mm.

11. Un dispositif de stockage d'énergie, comprenant l'ensemble couvercle supérieur (100) selon l'une quelconque des revendications 1 à 10.

12. Un système de stockage d'énergie, comprenant le dispositif de stockage d'énergie selon la revendication 11, le dispositif de stockage d'énergie étant configuré pour fournir de l'énergie au système de stockage d'énergie.
